(19) Europäisches Patentamt
European Patent Office
Office européen des brevets

(11) EP 4 553 042 A1

(12) EUROPEAN PATENT APPLICATION

(43) Date of publication:
**14.05.2025 Bulletin 2025/20**

(21) Application number: **23208593.6**

(22) Date of filing: **08.11.2023**

(51) International Patent Classification (IPC):
***C01B 32/26*** *(2017.01)* ***B01J 3/06*** *(2006.01)*

(52) Cooperative Patent Classification (CPC):
**C01B 32/26; B01J 3/06; B01J 3/062**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Max-Planck-Gesellschaft zur Förderung der Wissenschaften e.V.
80539 München (DE)**

(72) Inventors:
- **WEIL, Tanja
55128 Mainz (DE)**
- **ENDER, Christopher
55128 Mainz (DE)**
- **LIANG, Jiaxu
55128 Mainz (DE)**
- **WU, Yingke
55128 Mainz (DE)**

(74) Representative: **Maiwald GmbH
Elisenhof
Elisenstraße 3
80335 München (DE)**

# (54) METHOD FOR PREPARING NANODIAMONDS

(57) The present invention relates to a process for preparing diamond particles, comprising
subjecting a nanodiamond precursor material to a pressure of at least 8 GPa and a temperature of at least 900°C,
wherein the diamond precursor material comprises a polycyclic aromatic compound which contains from 10 to 200 fused six-membered aromatic rings.

EP 4 553 042 A1

## Description

The present invention relates to a method for preparing nanodiamonds.

Nanodiamonds (NDs) have excellent mechanical and optical properties, large surface area, easy bioconjugation and high biocompatibility, which makes them appealing for various biomedical applications from drug delivery to diagnostics, but also for spintronic and photonic applications.

By introducing non-carbon defect atoms (such as N, Si, Ge, B, etc.) and vacancy centers into the nanodiamond lattice, color centers (e.g. nitrogen-vacancy (NV) center, silicon-vacancy (SiV) center) are formed that provide several unique properties such as emission and magneto-optical features. The nitrogen-vacancy center is a point defect consisting of a substitutional nitrogen and a nearby vacancy revealing stable fluorescence without photobleaching or photoblinking, far-red emission, long lifetime, and high quantum efficiency. Consequently, nanodiamonds with these defects have attracted much attention for bioimaging applications.

Commercially available nanodiamonds are typically prepared by a so called detonation method ("detonation nanodiamonds") or by a high pressure high temperature (HPHT) method ("HPHT nanodiamonds").

According to the detonation method, explosives like TNT detonate in a closed chamber, resulting in very high temperatures and pressures inside the reaction vessel. As a result, nanodiamonds are formed in larger clusters with sizes down to 5 nm of a single nanodiamond. The main disadvantage of this technique is the formation of graphitic shells and soot-like structures (≈ 25 wt%) which surround the nanodiamond particles and the less crystalline structure of the nanodiamonds, which may result in less stable color centers.

According to the high-pressure high-temperature (HPHT) method, precursor materials are exposed to pressures of at least 7 GPa and temperatures up to 2200 °C, optionally in the presence of metal catalysts (e.g. Fe/Ni). Typically, this approach yields microdiamonds, which are further processed by high energy ball milling to break the microdiamonds to nanodiamonds. As a result of the ball milling post-treatment for reducing diamond particle size, the ground carbon material may have a high content of metal impurities which in turn may adversely affect its performance in the intended applications. The high energy impact during the ball milling treatment may promote the formation of a non-diamond layer on the particle surface. Furthermore, ball-milled nanodiamonds exhibit non-uniform shapes with sharp edges which make them less suitable for biomedical applications or quantum sensing in cells. Additionally, ball-milling of micron-sized fluorescence nanodiamonds results in nanodiamonds with non-uniform photoluminescence properties and non-uniform distribution of color centers.

Reviews on properties, applications and preparation methods of nanodiamonds are provided by the following publications:

Xi-Gui Yang et at., "Nanodiamonds: Synthesis, properties and applications in nanomedicine", Materials & Design, 2021, 210, 110091;
T. Weil, Y. Wu, "Recent Developments of Nanodiamond Quantum Sensors for Biological Applications", Adv. Sci., 2022, 9, 2200059;
E.K.-H. Chow et al., "Nanodiamonds: The intersection of nanotechnology, drug development, and personalized medicine", Sci. Adv. 2015; 1 :e1500439;
E.K.-H. Chow et al, "Biomedical applications of nanodiamonds: From drug-delivery to diagnostics", SLAS Technology 28 (2023) 214-222;
A. Miotello et al., "Nanodiamonds: Synthesis and Application in Sensing, Catalysis, and the Possible Connection with Some Processes Occurring in Space"; Appl. Sci., 2020, 10, 4094.

As mentioned above, high pressure high temperature (HPHT) methods for preparing diamonds are typically carried out in the presence of metal catalyst, thereby resulting in diamonds having a high level of metal contaminants which need to be removed by a laborious post-treatment.

However, it is also known that diamond-containing materials might be prepared by HPHT methods in the absence of metal catalysts.

V.A. Davydov et al., "Conversion of polycyclic aromatic hydrocarbons to graphite and diamond at high pressures", Carbon, 2005, 42, pp.261-269, describe a preparation method wherein the polycyclic aromatic hydrocarbons naphthalene, anthracene, pentacene, perylene, and coronene were submitted to temperatures up to 1500 °C at 8 GPa. Diamonds in the form of single crystals having a crystal size of 5 to 40 μm are obtained.

Xi-Gui Yang et al., "Two-step high-pressure high-temperature synthesis of nanodiamonds from naphthalene", Chin. Phys. B Vol. 29, No. 10 (2020) 108102, describe a two-step HPHT method for synthesizing nanodiamonds from a naphthalene precursor. This method includes a carbonization step at 11.5 GPa and 700 °C and a subsequent diamondation step at 11.5 GPa and 1700 °C, and results in diamond particles having an average size of 62 nm to 457 nm.

WO 2018/122321 A1 describes a method of forming polycrystalline diamond, comprising (i) placing a plurality of graphene nano-platelets into a capsule; and (ii) subjecting the platelets to a pressure of around 10 GPa to around 20 GPa

and a temperature of around 1600 °C to around 3000 °C to convert the graphene platelets to nano-polycrystalline diamond. The X-Y (i.e. in-plane) dimension of the graphene nano-platelets used as diamond precursors ranges from 20 nm to 25000 nm. The polycrystalline diamond obtained by said process is a mass of sintered diamond grains being directly inter-bonded with each other.

For some applications, in particular biological applications, it is preferred or even necessary to use nanodiamond particles having an average particle size of less than 20 nm or even less than 10 nm *("sub-10 nm NDs").* Small sized (less than 10 nm) and round shaped NDs are in particular critical for those biological applications which require the NDs to pass through the cell membrane.

As mentioned above, nanodiamonds prepared via HPHT methods typically have an average particle size well above 10 nm. For providing nanodiamonds having an average particle size of less than 10 nm, the HPHT micro- and nanodiamonds might be subjected to a ball milling post-treatment which, however, is laborious and may result in nanodiamonds having a high level of metal contaminants or promote the formation of a non-diamond structure on the particle surface.

S. Stehlik et al., "Size and Purity Control of HPHT Nanodiamonds down to 1 nm", J. Phys. Chem. C, 2015, 119, 27708-27720, describe a process wherein HPHT nanodiamonds are subjected to a thermal treatment at 450°C and subsequently centrifuged so as to separate a nanodiamond fraction having an average particle size of less than 10 nm.

A non-HPHT process for preparing nanodiamonds is described by R.S. Ruoff et al., "Sub-4 nm Nanodiamonds from Graphene Oxide and Nitrated Polycyclic Aromatic Hydrocarbons at 423 K", ACS Nano, 2021, 15, 11, 17392-17400. Graphene oxide and nitrated naphthalene, anthracene, phenanthrene, and pyrene are subjected to a hydrothermal treatment at 423 K and transformed into nanodiamonds having diameters of less than 4 nm. The nanoparticles have a structure in which the outer layer is made of amorphous carbon. In addition, the nanoparticles are themselves embedded in a significant amount of amorphous carbon, originating mainly from residues. The residues include amorphous carbon, nitric salts, and precursors that have been modified during the hydrothermal process.

An object of the present invention is to provide diamonds of defined particle shape and narrow particle size distribution. The diamonds should be obtainable at high yield and high purity (e.g. low amount of amorphous or graphitic carbon) and have a small particle size (e.g. less than 20 nm).

The object is solved by a process for preparing diamond particles, comprising

subjecting a diamond precursor material to a pressure of at least 8 GPa and a temperature of at least 900°C, wherein the diamond precursor material comprises a polycyclic aromatic compound which contains from 10 to 200 fused six-membered aromatic rings.

As known to the skilled person, a fused aromatic ring is an aromatic ring that shares with a neighbouring aromatic ring two of its ring atoms and one bond (wherein the shared ring atoms are adjacent ring atoms and the shared bond connects the shared ring atoms). In principle, a six-membered aromatic ring can be fused to up to six other aromatic rings which, in turn, can be fused to further aromatic rings.

The polycyclic aromatic compound used in the HPHT process of the present invention as a diamond precursor material can be transformed to diamond particles having a narrow particle size distribution and an average particle size of less than 20 nm or even less than 10 nm without using a metal catalyst. Furthermore, as the diamond particles obtained by the HPHT treatment already have an average particle size of less than 20 nm, no ball-milling post treatment is necessary.

Accordingly, apart from having an average particle size of less than 20 nm or even less than 10 nm (which is needed for some applications of nanodiamonds) and a narrow particle size distribution, the diamond particles obtainable by the process of the present invention have a very low amount of or even no metal contaminants.

Furthermore, although no metal catalyst is used in the process of the present invention, the diamonds are obtained at high yield whereas the amount of non-diamond carbon (such as graphitic carbon) is very low.

As mentioned above, the polycyclic aromatic compound used as a diamond precursor material contains from 10 to 200 fused six-membered aromatic rings. Accordingly, each of these fused six-membered aromatic rings shares with a neighbouring aromatic ring to which it is fused two ring atoms and one bond (wherein the shared ring atoms are adjacent ring atoms and the shared bond connects the shared ring atoms).

Such polycyclic aromatic compounds are known to the skilled person and are commercially available or can be prepared by commonly known synthesis methods which are described e.g. in the following publications:

K. Müllen et al., "From Nanographene and Graphene Nanoribbons to Graphene Sheets: Chemical Synthesis", Angew. Chem. Int. Ed., 2012, 51, 7640-7654;
K. Müllen et al., "Graphene as Potential Material for Electronics", Chem. Rev., 2007, 107, 718-747;
K. Müllen et al., "New advances in nanographene chemistry", Chem. Soc. Rev., 2015, 44, 6616-6643;
K. Müllen et al., "Large polycyclic aromatic hydrocarbons: Synthesis and discotic organization", Pure Appl. Chem., Vol. 81, No. 12, pp. 2203-2224, 2009;

A. Tran-Van, H.A. Wegner, "Strategies in Organic Synthesis for Condensed Arenes, Coronene, and Graphene", Top. Curr. Chem., 2014, 349, 121-158.

In the following, a six-membered aromatic ring might also be referred to as

- a "sixfold fused" or "fully fused" six-membered aromatic ring if being fused to six other aromatic rings; and
- a "partially fused" six-membered aromatic ring if being fused to less than six other aromatic rings.

A ring atom of one of the fused six-membered aromatic rings might be referred to as

- a "non-shared" ring atom RA-1 if not being shared with another fused aromatic ring;
- a "twofold-shared" ring atom RA-2 if being shared with exactly one other fused aromatic ring;
- a "threefold-shared" ring atom RA-3 if being shared with exactly two other fused aromatic rings.

A non-shared ring atom and a twofold-shared ring atom might also be referred to as edge-located ring atoms as they are located on an edge of the polycyclic aromatic compound. A threefold-shared ring atom might also be referred to as an internal ring atom as it is located in the internal part of the polycyclic aromatic compound.

Non-shared, twofold-shared and threefold-shared ring atoms are illustrated by the following Formula (i) which is a cutout from a larger polycyclic aromatic compound:

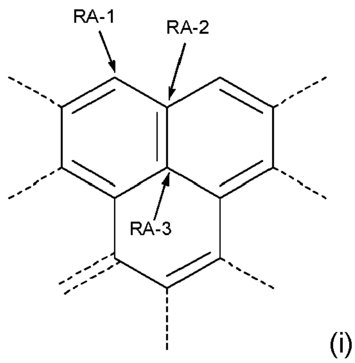

(i)

According to an exemplary embodiment, the polycyclic aromatic compound may contain from 10 to 100, more preferably 12 to 55 fused six-membered aromatic rings.

Optionally, the polycyclic aromatic compound may contain, in addition to the fused six-membered aromatic rings, fused five-membered aromatic rings.

In an exemplary embodiment, the polycyclic aromatic compound does not contain any fused aromatic rings other than the six-membered aromatic rings.

Each of the fused six-membered aromatic rings of the polycyclic aromatic compound can be a ring containing no ring atoms other than carbon (aromatic all-carbon ring) or a heteroaromatic ring comprising at least one, preferably one or two heteroatom (i.e. non-carbon) ring atoms e.g. nitrogen or boron atoms.

According to an exemplary embodiment, at least one of the fused six-membered aromatic rings of the polycyclic aromatic compound might be a six-membered heteroaromatic ring. The one or more six-membered heteroaromatic rings may comprise at least one, preferably one or two heteroatom (i.e. non-carbon) ring atoms. Preferably, the heteroatom is nitrogen or boron, more preferably nitrogen.

If one or more heteroaromatic rings are present in the polycyclic aromatic compound, non-carbon defect atoms (such as N or B) can be introduced into the diamond lattice, thereby obtaining diamond particles which comprise color centers.

Alternatively, none of the fused six-membered aromatic rings may comprise a ring atom other than carbon.

Preferably, at least one of the fused six-membered aromatic rings is a fully fused aromatic ring (i.e. an aromatic ring being fused to six other aromatic rings). More preferably, two or more of the fused six-membered aromatic rings are fully fused aromatic rings.

According to an exemplary embodiment, the polycyclic aromatic compound complies with the following requirement:

$$N(RA\text{-}2) + N(RA\text{-}3) > N(RA\text{-}1)$$

wherein

N(RA-2) is the total number of the twofold-shared ring atoms of the fused six-membered aromatic rings,
N(RA-3) is the total number of the threefold-shared ring atoms of the fused six-membered aromatic rings,
N(RA-1) is the total number of the non-shared ring atoms of the fused six-membered aromatic rings.

According to an exemplary embodiment, the polycyclic aromatic compound complies with the following requirement:

$$N(RA\text{-}3) \geq N(RA\text{-}2)$$

wherein N(RA-3) and N(RA-2) have the same meaning as outlined above.
Preferably, the following requirement is met: N(RA-3) > N(RA-2)
In an exemplary embodiment, the polycyclic aromatic compound complies with the following requirements:

$$N(RA\text{-}2) + N(RA\text{-}3) > N(RA\text{-}1);$$

and

$$N(RA\text{-}3) \geq N(RA\text{-}2)$$

Preferably, the following requirements are met:

$$N(RA\text{-}2) + N(RA\text{-}3) > N(RA\text{-}1);$$

and

$$N(RA\text{-}3) > N(RA\text{-}2);$$

and
According to an exemplary embodiment, at least one of the fused six-membered aromatic rings is a substituted aromatic ring to which at least one substituent $R^S$ is attached, wherein the substituent $R^S$ is selected from a $C_{1-20}$ alkyl group (e.g. $C_{1-4}$ alkyl); an aryl (e.g. phenyl) group; an amine group; a carboxylic acid group (-COOH) or a salt or an ester (e.g. a $C_{1-4}$ alkyl ester) thereof; a silyl group; a germanyl group; and a boron-containing group.
The amine group might have the following formula:

$-N(R^1)(R^2)$

wherein $R^1$ and $R^2$ are, independently from each other, hydrogen, $C_{1-4}$ alkyl or aryl (e.g. phenyl).
The silyl group might have the following formula:

$-Si(R^1)_x(OR^2)_y$

wherein

x is 0, 1, 2 or 3; y is 0, 1, 2, or 3, under the provision that x + y = 3;
$R^1$ and $R^2$ are, independently from each other, $C_{1-4}$ alkyl or aryl (e.g. phenyl).

According to an exemplary embodiment, the silyl group might be $-Si(R^1)_3$ (i.e. x=3; y=0).
The germanyl group might have the following formula:

$-Ge(R^1)_x(OR^2)_y$

wherein

x is 0, 1, 2 or 3; y is 0, 1, 2, or 3, under the provision that x + y = 3;

$R^1$ and $R^2$ are, independently from each other, $C_{1-4}$ alkyl or aryl (e.g. phenyl).

According to an exemplary embodiment, the germanyl group might be -Ge($R^1$)$_3$ (i.e. x=3; y=0).

The boron-containing group might be a boronic acid group or a boronic acid ester group.

If the one or more substituents $R^S$ are heteroatom-containing substituents, non-carbon atoms can be introduced into the diamond lattice, thereby obtaining heteroatom-doped diamond particles.

Furthermore, the presence of substituents $R^S$ may improve solubility of the polycyclic aromatic compound in solvents and thereby assist in preparing a homogeneous mixture of the polycyclic aromatic compound with a second compound. Accordingly, if the diamond precursor material comprises a mixture of the polycyclic aromatic compound and a second compound (e.g. a mixture of a heteroatom-free polycyclic aromatic compound and a heteroatom-containing compound), both compounds can be dissolved in an appropriate solvent, followed by evaporating the solvent, thereby obtaining a very homogeneous powder mixture of these compounds which is subsequently subjected to the high-pressure high-temperature treatment.

Alternatively, according to an exemplary embodiment, none of the fused six-membered aromatic rings of the polycyclic aromatic compound is a substituted aromatic ring.

The polycyclic aromatic compound may have one of the following Formulas (I) to (XVI):

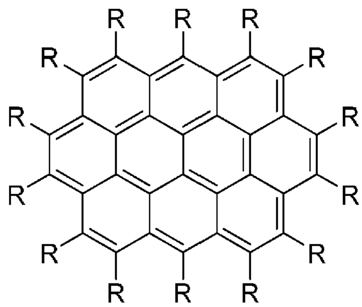

(I)

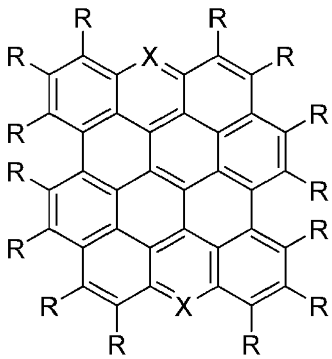

(II)

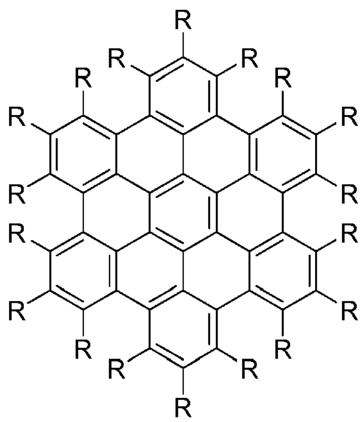

(III)

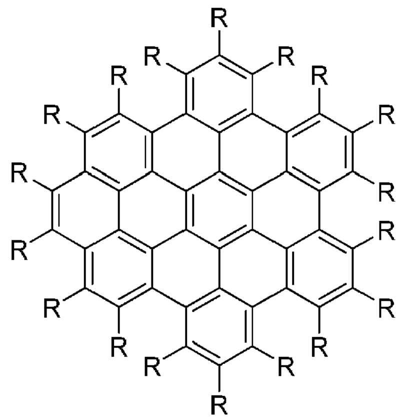

(IV)

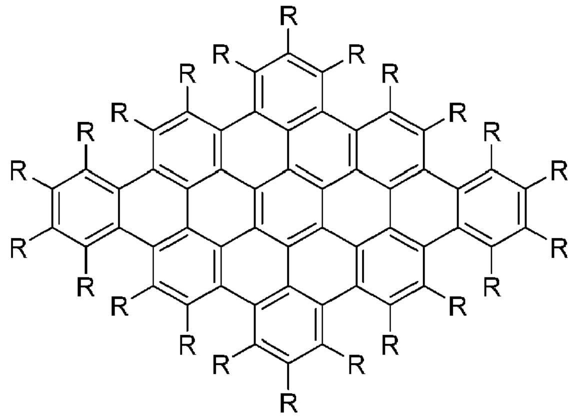

(V)

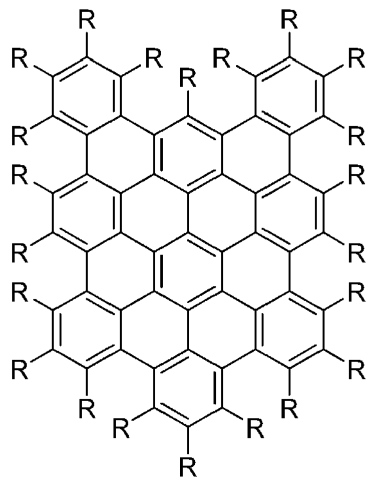

(VI)

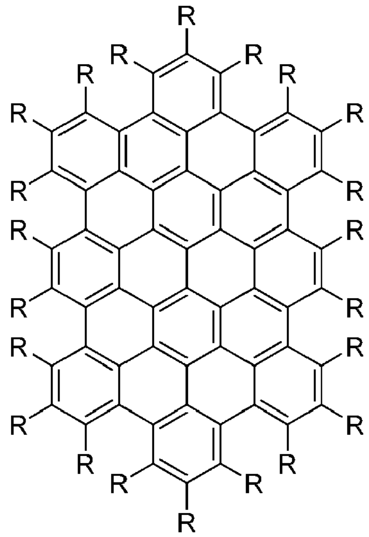

(VII)

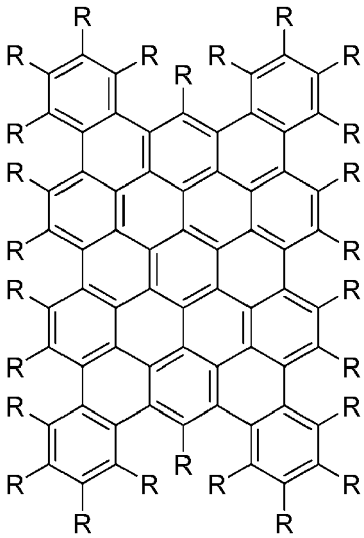

(VIII)

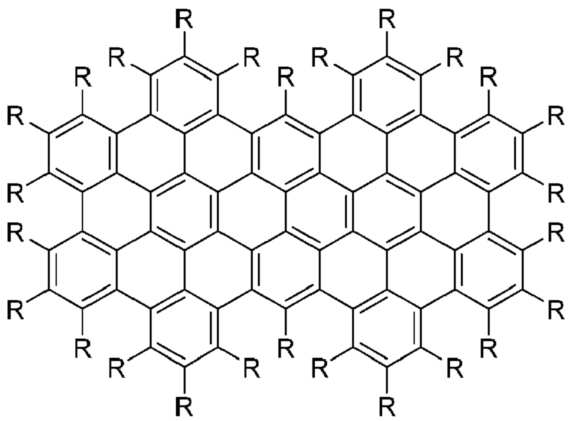

(IX)

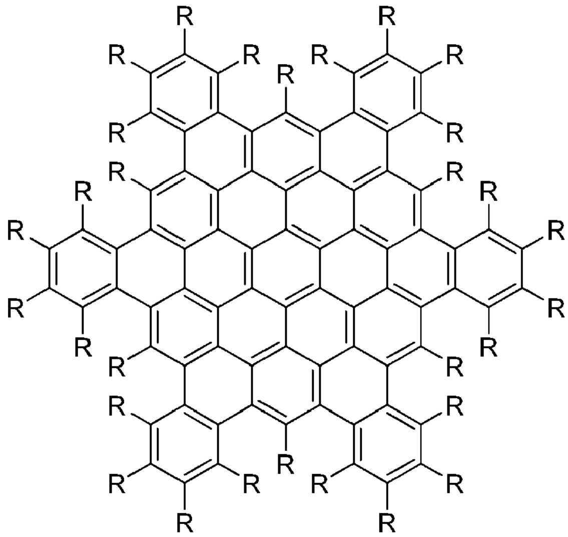

(X)

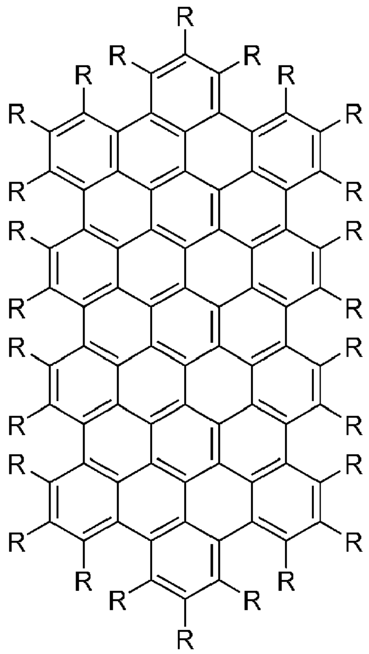

(XI)

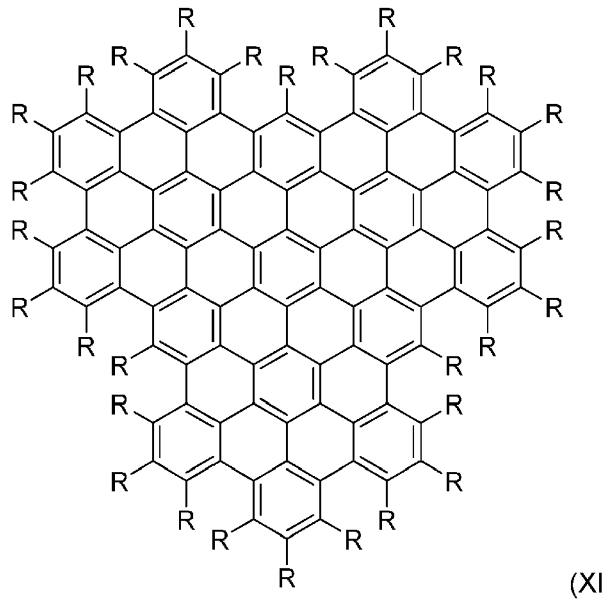

(XII)

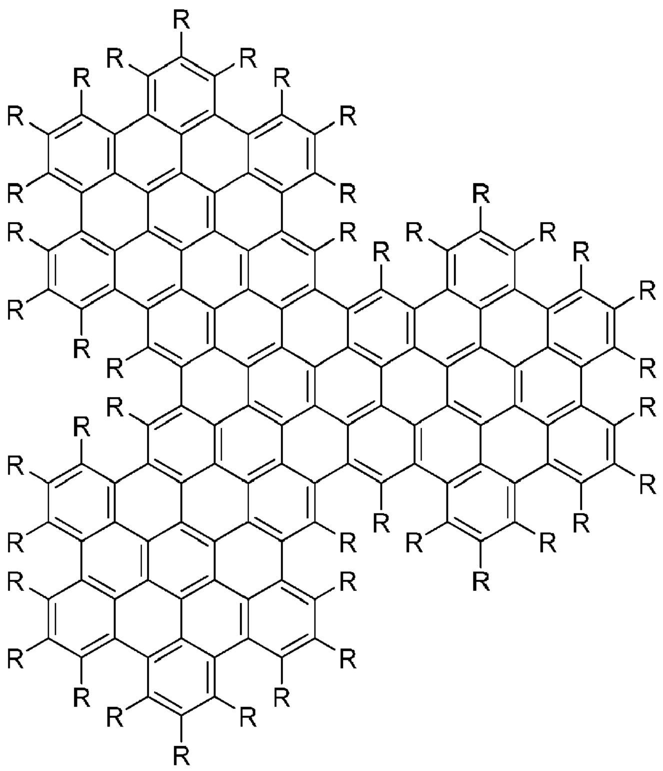

(XIII)

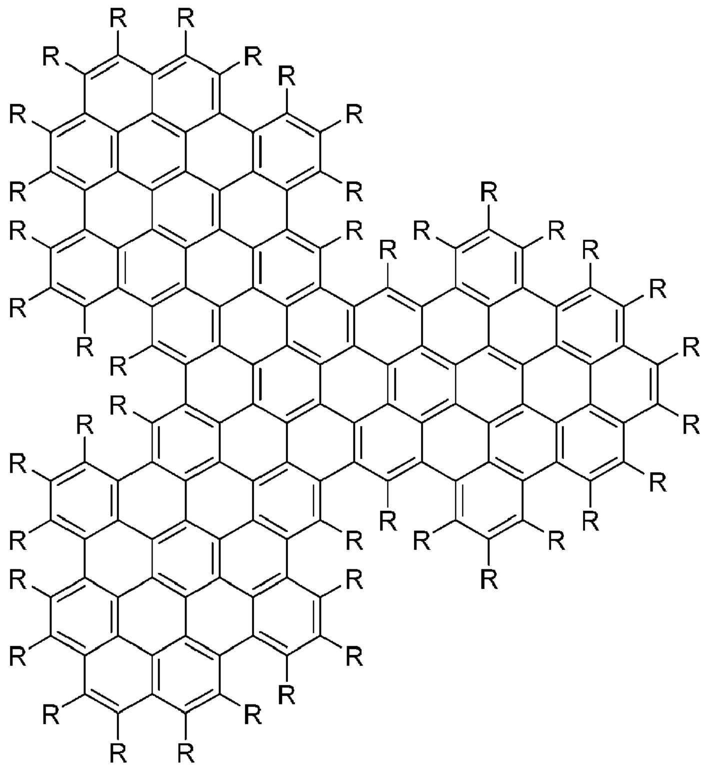

(XIV)

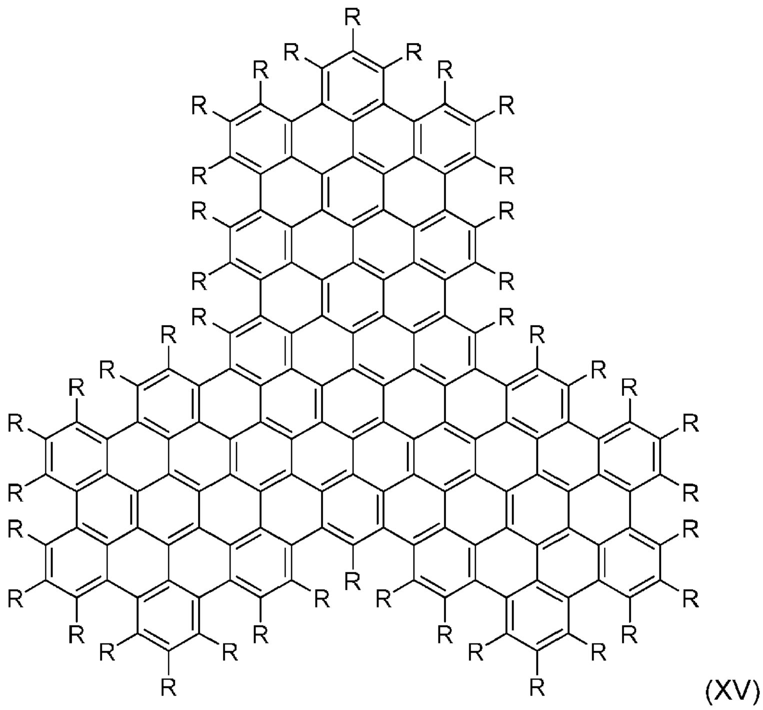

(XV)

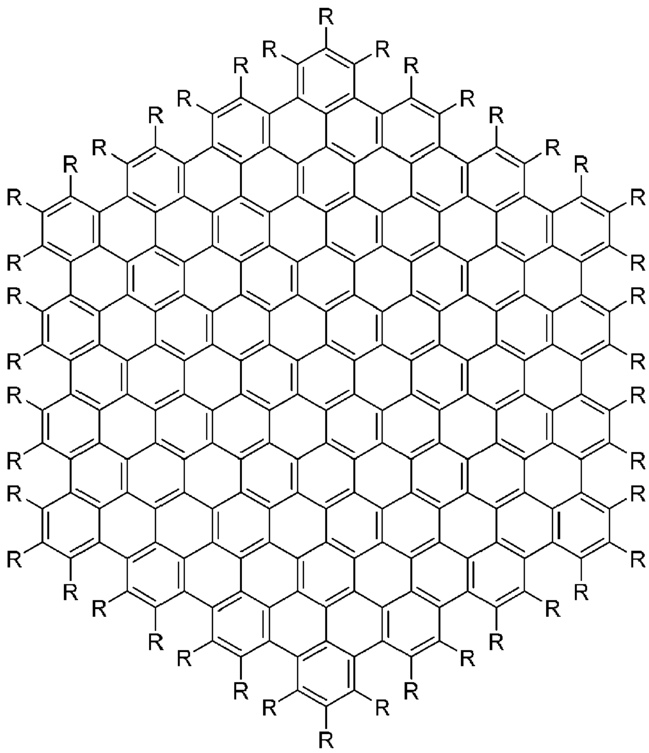

(XVI)

wherein in each of the Formulas (I) to (XVI)

the residues R are, independently from each other, hydrogen or a substituent $R^S$,
wherein in Formula (II)
the ring atoms X are, independently from each other, are C or N.

As mentioned above, the subsituent $R^S$ might be selected from a $C_{1-20}$ alkyl group (e.g. $C_{1-4}$ alkyl); an aryl (e.g. phenyl) group; an amine group; a carboxylic acid group (-COOH) or a salt or an ester (e.g. a $C_{1-4}$ alkyl ester) thereof; a silyl group; a germanyl group; and a boron-containing group.
Exemplary amine, silyl, germanyl and boron-containing groups include those mentioned above.
According to an exemplary embodiment, the residues R are, independently from each other, hydrogen or a $C_{1-20}$ alkyl group (e.g. $C_{1-4}$ alkyl).
If the polycyclic aromatic compound comprises an edge part having one of the following Formulas (a) and (b)

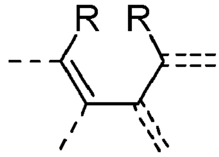

(a)

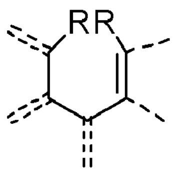

(b)

it might be preferred that the adjacent groups R in Formulas (a) and (b) are hydrogen. The dotted lines in Formulas (a) and (b) represent bonds to other ring atoms of the fused six-membered aromatic rings.
An exemplary polycyclic aromatic compound of Formula (II) may have the following Formula (IIa):

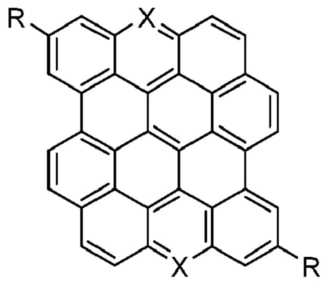

(IIa)

wherein

the residues R are, independently from each other, hydrogen or the above-mentioned substituent $R^S$,
the ring atoms X are, independently from each other, C or N.

An exemplary polycyclic aromatic compound of Formula (III) may have the following Formula (IIIa):

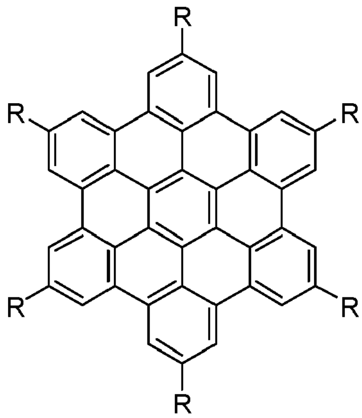

(IIIa)

wherein
the residues R are, independently from each other, hydrogen or the above-mentioned substituent $R^S$.

An exemplary polycyclic aromatic compound of Formula (VII) may have the following Formula (VIIa):

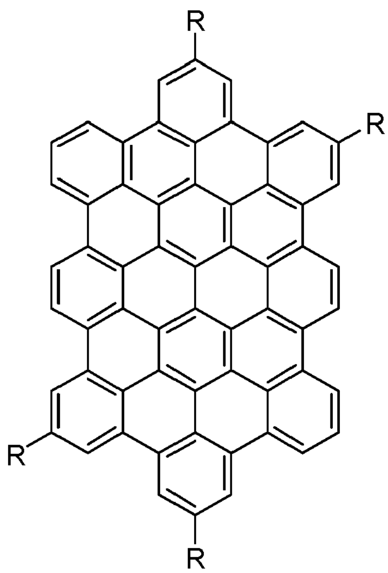

(VIIa)

wherein
the residues R are, independently from each other, hydrogen or the above-mentioned substituent $R^S$.

An exemplary polycyclic aromatic compound of Formula (XI) may have the following Formula (XIa):

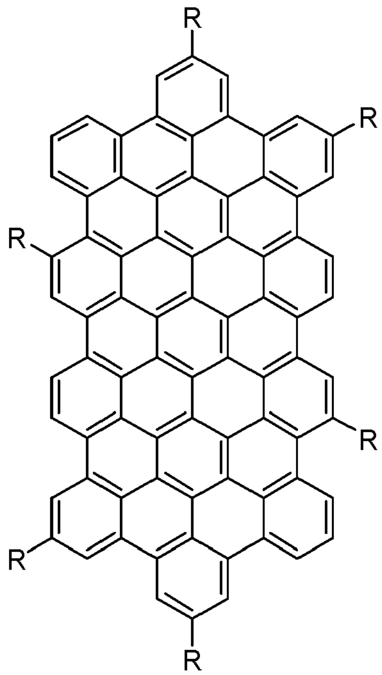

(XIa)

wherein
the residues R are, independently from each other, hydrogen or the above-mentioned substituent $R^S$.

An exemplary polycyclic aromatic compound of Formula (XII) may have the following Formula (XIIa):

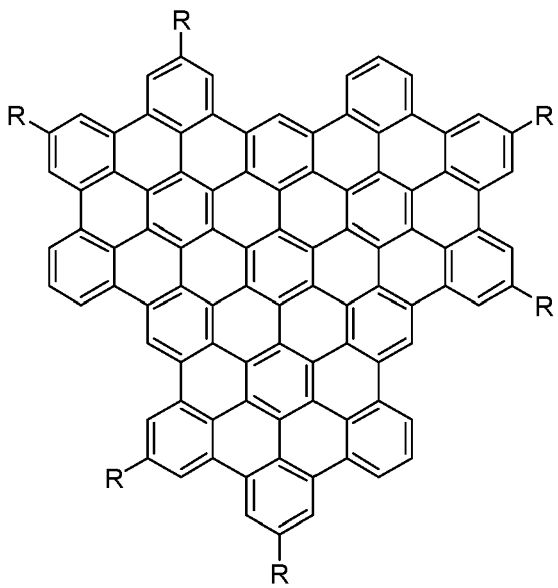

(XIIa)

wherein
the residues R are, independently from each other, hydrogen or the above-mentioned substituent $R^S$.

According to an exemplary embodiment, the residues R are, independently from each other, hydrogen or a $C_{1-20}$ alkyl group (e.g. $C_{1-4}$ alkyl) in each of the Formulas (IIa), (IIIa), (VIIa), (XIa) and (XIIa).

The polycyclic aromatic compound used in the process of the present invention is preferably not a carbon nanotube or a fullerene.

In addition to the polycyclic aromatic compound, the diamond precursor material may comprise a heteroatom-containing dopant compound.

The heteroatom-containing dopant compound may assist in introducing heteroatoms into the diamond particles.

The heteroatom is preferably selected from nitrogen, silicon, germanium and boron.

The heteroatom-containing dopant compound, if present, differs from the polycyclic aromatic compound. As an example, the polycyclic aromatic compound may comprise no atoms other than carbon and hydrogen. Alternatively, the polycyclic aromatic compound may comprise one or more heteroatoms (preferably selected from nitrogen, silicon, germanium and boron) which are different from the one or more heteroatoms being present in the heteroatom-containing dopant compound.

The heteroatom-containing dopant compound might be selected from one or more of the following compounds:

- a silane,
- an amine $N(R^1)(R^2)(R^3)$,
  wherein $R^1$, $R^2$ and $R^3$ are, independently from each other, selected from aryl (e.g. phenyl) and $C_{1-20}$ alkyl,
- a nitrogen-containing polycyclic aromatic compound comprising 2 to 4 (e.g. 3) fused aromatic rings, wherein at least one of the fused aromatic rings comprises nitrogen as a ring atom and/or is substituted with a cyano (i.e. -CN) group.

The silane might be tetraphenyl silane or tetrakis(trimethylsilyl)silane.

An exemplary amine is triphenylamine.

Exemplary nitrogen-containing polycyclic aromatic compounds are acridine and a cyanoanthracene.

If the diamond precursor material comprises both the polycyclic aromatic compound and the heteroatom-containing dopant compound, it is preferred to provide an intimate mixture of these compounds.

The diamond precursor material might be prepared by dissolving or dispersing the polycyclic aromatic compound and the heteroatom containing dopant compound in a liquid medium, followed by evaporating the liquid medium, thereby obtaining a mixture of the polycyclic aromatic compound and the heteroatom containing dopant compound.

As indicated above, the diamond precursor material is subjected to a pressure of at least 8 GPa and a temperature of at least 900°C.

Typically, said treatment of the diamond precursor material is carried out in a press cell.

Press cells for HPHT processes at a pressure of at least 8 GPa and a temperature of at least 900°C are known to the skilled person.

The process might be carried out in a multi-anvil press. The multi-anvil press may comprise four or more anvils. Multi-anvil presses are well known to the skilled person, see e.g. R.C. Liebermann, "Multi-anvil, high pressure apparatus: a half-century of development and progress", High Pressure Research, Vol. 31, No. 4, 2011, pp. 493-532.

According to an exemplary embodiment, the pressure is at least 10 GPa and the temperature is at least 1100°C.

The diamond precursor material might be subjected to a pressure of at least 8 GPa, more preferably at least 10 GPa and subsequently heated at said pressure to a temperature of at least 900°C, more preferably at least 1100°C.

The time needed for transforming the diamond precursor material into diamond particles can be determined by routine experiments.

Optionally, the diamond particles might be post-treated by a liquid or gaseous post-treatment medium containing one or more oxidants. Such post-treatment media are known to the skilled person and assist in removing non-diamond residues (e.g. graphitic or amorphous carbon residues).

An exemplary liquid post-treatment medium can be an aqueous composition comprising $HNO_3$, $H_2SO_4$ and optionally $HClO_4$. The post-treatment might be carried out at a temperature of 70-100°C. However, higher or lower post-treatment temperatures might be used as well.

The gaseous post-treatment medium might be an oxygen-containing gas (e.g. air). The post-treatment might be carried out at a temperature of 400-600°C. However, higher or lower post-treatment temperatures might be used as well.

Optionally, the process may include a post-treatment of the diamond particles by sonication.

The diamond particles obtained by the process of the present invention may have an average particle size, based on a particle size number distribution, of less than 50 nm, more preferably less than 20nm, even more preferably less than 10 nm. The average particle size might be determined by transmission electron microscopy according to ISO 21363:2020.

As already mentioned above, the polycyclic aromatic compounds used in the HPHT process of the present invention as a diamond precursor material can be transformed to diamond particles having a narrow particle size distribution and an average particle size of less than 50 nm or even less than 20 nm without using a metal catalyst. Furthermore, as the diamond particles obtained by the process of the present invention already have a small average particle size, no ball-milling post treatment is necessary. Accordingly, apart from having a small average particle size (which is needed for some applications of nanodiamonds) and a narrow particle size distribution, the diamond particles obtainable by the process of the present invention have a very low amount of or even no metal contaminants. Furthermore, although no metal catalyst is used in the process of the present invention, the diamonds are obtained at high yield whereas the amount of non-diamond carbon (such as graphitic) is very low.

The diamond particles might be present in the form of a powder or might be dispersed in a liquid (e.g. aqeous) dispersion medium.

The present invention also relates to the use of the polycyclic aromatic compound described above as a precursor in diamond particle synthesis, in particular HPHT (high pressure high temperature) diamond particle synthesis.

With regard to preferred properties of the polycyclic aromatic compound, reference can be made to the statements made above.

## Examples

### Inventive Example IE1

A multi anvil cell was charged with 8 g of a polycyclic aromatic compound containing 34 fused aromatic rings and having the following Formula:

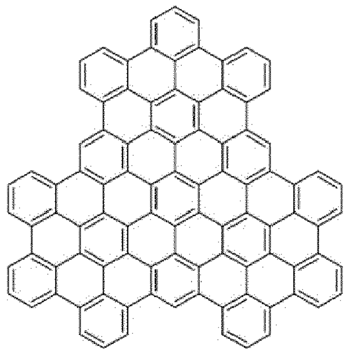

The polycyclic aromatic compound was prepared as described by K. Müllen et al., Angew. Chem. Int. Ed. Engl., 1997, 36, No. 15, pp. 1604-1607.

Pressure was applied up to the set-point of 12 GPa. At the set pressure, the sample was heated with a heating rate of 100 K/min and held at 1200 °C for 2 h. A powder was obtained which was subjected to a post-treatment with a $HClO_4/H_2SO_4/HNO_3$ mixture (vol. ratio 1:1:1) at 90 °C for about 4 h.

The obtained powder was analyzed by Raman spectroscopy, X-ray diffraction (XRD), selected area electron diffraction (SAED) and transmission electron microscopy (TEM).

Raman spectroscopy was conducted using a customized confocal microscope with 532 nm excitation laser (LaserQuantum Tau532) typically operating at 30 mW output power focused onto the sample using a 10× Mitutoyo air objective with long working distance. The high resolution Transmission electron microscopy (TEM) images and selected-area electron diffraction (SAED) were obtained with a field-emission transmission electron microscopy (FE-TEM, Tecnai G2 F20 U-TWIN). Powder X-ray diffraction (PXRD) measurements were performed on a Rigaku SmartLab spectrometer using a Cu K-$\alpha$ anode ($\lambda$ = 1.5406 Å). The powders were placed on a zero reflection Si substrate.

Raman analysis confirmed the diamond lattice with a peak at 1324 $cm^{-1}$. No graphitic material was detected, as the G peak (~ 1590 - 1620 $cm^{-1}$) was missing in the Raman spectrum.

X-ray powder diffraction (XRPD) analysis also confirmed the diamond lattice, showing the relevant peaks of the D111 (2.07 Å), D220 (1.26 Å) and D311 (1.08 Å) planes of the crystals.

Selected area electron diffraction (SAED) proved again the presence of the diamond lattice by showing the according D111, D220 and D311 reflections.

TEM analysis showed nanodiamond particles of narrow size distribution with diameters of ≈ 5 nm and uniform, almost spherical shapes.

### Inventive Example IE2

The same polycyclic aromatic compound as in Inventive Example IE1 was used.

The same multi anvil cell as used in Inventive Example IE1 was charged with 8 g of the polycyclic aromatic compound. Pressure was applied up to the set-point of 19 GPa. At the set pressure, the sample was heated with a heating rate of 100 K/min and held at 1600 °C for 2 h. A powder was obtained which was subjected to a post-treatment with a $HClO_4/H_2SO_4/HNO_3$ mixture (vol. ratio 1:1:1) at 90 °C for about 4 h.

Again, the obtained powder was analyzed by Raman spectroscopy, X-ray diffraction (XRD), selected area electron diffraction (SAED) and transmission electron microscopy (TEM) under the same measuring conditions as in Inventive Example IE1.

Raman analysis confirmed the diamond lattice with a peak at 1333 $cm^{-1}$. No graphitic material was detected, as the G peak (~ 1590 - 1620 $cm^{-1}$) was missing in the Raman spectrum.

XRPD analysis also confirmed the diamond lattice, showing the relevant peaks of the D111 (2.06 Å), D220 (1.26 Å) and D311 (1.08 Å) plane of the crystals. Selected area electron diffraction (SAED) proved again the presence of the diamond lattice by showing the D111, D220 and D311 reflections.

TEM analysis showed nanodiamond particles of narrow size distribution with diameters of ≈ 15 nm and uniform, almost spherical shapes.

**Inventive Example 3**

A multi anvil cell was charged with 8 g of a polycyclic aromatic compound containing 12 fused aromatic rings and having the following Formula:

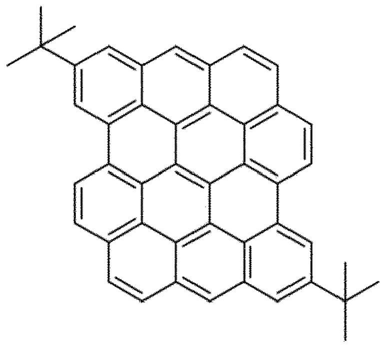

The polycyclic aromatic compound was prepared as described by K. Müllen et al., J. Am. Chem. Soc., 2021, 143, pp. 10403-10412 and Supporting Information.

Pressure was applied up to the set-point of 12 GPa. At the set pressure, the sample was heated with a heating rate of 100 K/min and held at 1200 °C for 2 h. A powder was obtained which was subjected to a post-treatment with a $HClO_4/H_2SO_4/HNO_3$ mixture (vol. ratio 1:1:1) at 90 °C for about 4 h.

The obtained powder was analyzed by Raman spectroscopy under the same measuring conditions as in Inventive Example IE1.

Raman analysis confirmed the diamond lattice with a peak at 1333 $cm^{-1}$. No graphitic material was detected, as the G peak (~ 1590 - 1620 $cm^{-1}$) was missing in the Raman spectrum.

**Comparative Example CE1**

A multi anvil cell was charged with 8 g of coronene which is a polycyclic aromatic compound containing 7 fused aromatic rings and has the following Formula:

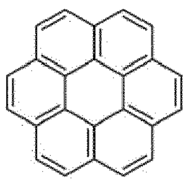

Pressure was applied up to the set-point of 12 GPa. At the set pressure, the sample was heated with a heating rate of 100 K/min and held at 1200 °C for 2 h. A powder was obtained which was subjected to a post-treatment with a $HClO_4/H_2SO_4/HNO_3$ mixture (vol. ratio 1:1:1) at 90 °C.

The obtained powder was analyzed by Raman spectroscopy and X-ray diffraction (XRD) under the same measuring conditions as in Inventive Example IE1.

Raman analysis showed two peaks at 1372 $cm^{-1}$ and 1613 $cm^{-1}$ corresponding to the D and G peaks of graphitic materials. No diamond peak (~ 1333 $cm^{-1}$) was detected.

X-ray powder diffraction (XRPD) analysis confirmed the presence of graphitic material, showing the relevant peak of the G002 plane at 26 °. Additionally, a peak of rather low intensity at 44 ° was detected, said peak originating from the D111 plane of the diamond structure. Accordingly, the powder obtained in Comparative Example 1 was mainly made of a graphitic material, whereas diamond particles were only present in minor amounts.

The precursor materials, pressure and temperature conditions and properties of the products of Inventive Examples 1-3 and Comparative Example 1 are summarized in Table 1.

Table 1: Precursor materials, pressure and temperature conditions and product properties

| | Number of fused six-membered aromatic rings of the polycyclic aromatic precursor compound | HPHT Conditions (Pressure and Temperature) | Product |
|---|---|---|---|
| Inventive Example 1 | 34 | 12 GPa, 1200 °C | Nanodiamond particles of high purity, no graphitic carbon detected<br>Narrow size distribution with diameters of ≈ 5 nm and uniform, almost spherical shapes |
| Inventive Example 2 | 34 | 19 GPa, 1600 °C | Nanodiamond particles of high purity, no graphitic carbon detected<br>Narrow size distribution with diameters of ≈ 15 nm and uniform, almost spherical shapes |
| Inventive Example 3 | 12 | 12 GPa, 1200 °C | Nanodiamond particles of high purity, no graphitic carbon detected |
| Comparative Example 1 | 7 | 12 GPa, 1200 °C | Graphitic material as main component, diamond material only in minor amounts |

The polycyclic aromatic compound used in the HPHT process of the present invention as a diamond precursor material can be transformed to diamond particles having a narrow particle size distribution and an average particle size of less than 20 nm or even less than 10 nm without using a metal catalyst. Furthermore, as the diamond particles obtained by the HPHT treatment already have an average particle size of less than 20 nm, no ball-milling post treatment is necessary.

Furthermore, although no metal catalyst is used in the process of the present invention, the diamonds are obtained at high yield whereas the amount of non-diamond carbon (such as graphitic carbon) is very low.

## Claims

1. A process for preparing diamond particles, comprising

    subjecting a diamond precursor material to a pressure of at least 8 GPa and a temperature of at least 900°C, wherein the diamond precursor material comprises a polycyclic aromatic compound which contains from 10 to 200 fused six-membered aromatic rings.

2. The process according to claim 1, wherein the polycyclic aromatic compound does not contain any fused aromatic rings other than the six-membered aromatic rings.

3. The process according to claim 1 or 2, wherein at least one of the fused six-membered aromatic rings is a six-membered heteroaromatic ring.

4. The process according to claim 3, wherein the one or more six-membered heteroaromatic rings comprise at least one, preferably one or two non-carbon ring atoms, wherein the non-carbon ring atoms are selected from nitrogen and boron.

5. The process according to claim 1 or 2, wherein none of the fused six-membered aromatic rings comprises a ring atom other than carbon.

6. The process according to one of the preceding claims, wherein at least one of the fused six-membered aromatic rings is a substituted aromatic ring to which at least one substituent $R^S$ is attached, wherein the substituent $R^S$ is selected from a $C_{1-20}$ alkyl group; an aryl (e.g. phenyl) group; an amine group; a carboxylic acid group (-COOH) or a salt or an ester thereof; a silyl group; a germanyl group; and a boron-containing group.

7. The process according to one of the claims 1 to 5, wherein none of the fused six-membered aromatic rings is a

substituted aromatic ring.

**8.** The process according to one of the preceding claims, wherein the polycyclic aromatic compound complies with the following requirement:

$$N(RA\text{-}2) + N(RA\text{-}3) > N(RA\text{-}1)$$

wherein

N(RA-2) is the total number of twofold-shared ring atoms of the fused six-membered aromatic rings, wherein a twofold-shared ring atom of one of the six-membered aromatic rings is a ring atom being shared with exactly one other fused aromatic ring;
N(RA-3) is the total number of threefold-shared ring atoms of the fused six-membered aromatic rings, wherein a threefold-shared ring atom of one of the six-membered aromatic rings is a ring atom being shared with two other fused aromatic rings;
N(RA-1) is the total number of non-shared ring atoms of the fused six-membered aromatic rings, wherein a non-shared ring atom of one of the six-membered aromatic rings is a ring atom not being shared with another fused aromatic ring.

**9.** The process according to one of the preceding claims, wherein the polycyclic aromatic compound has one of the following Formulas (I) to (XVI):

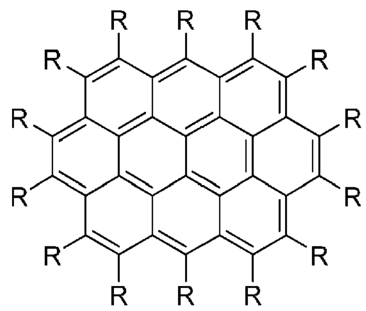
(I)

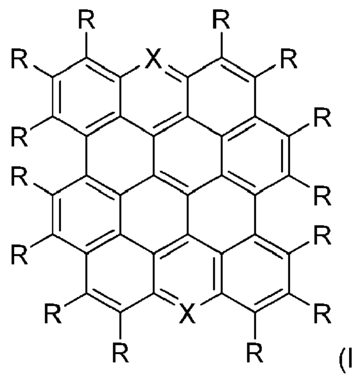
(II)

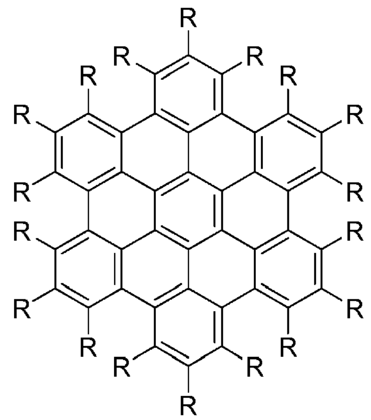

(III)

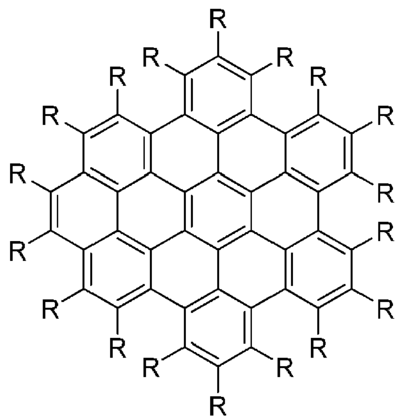

(IV)

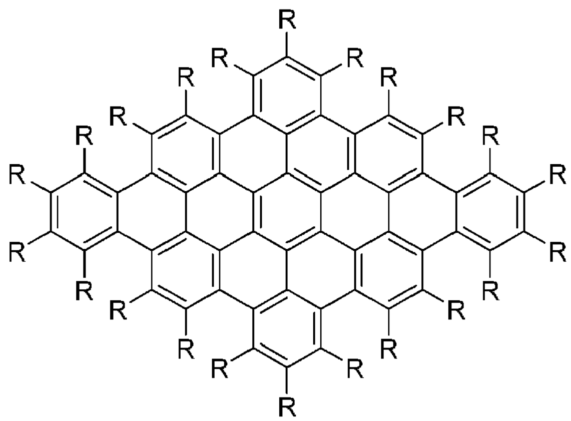

(V)

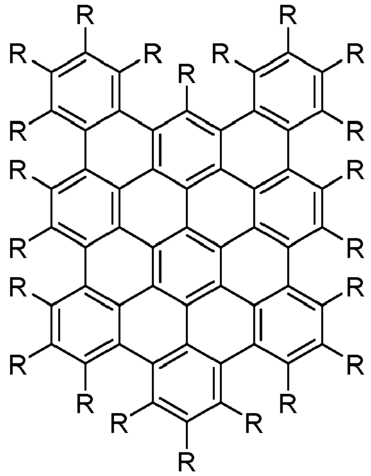

(VI)

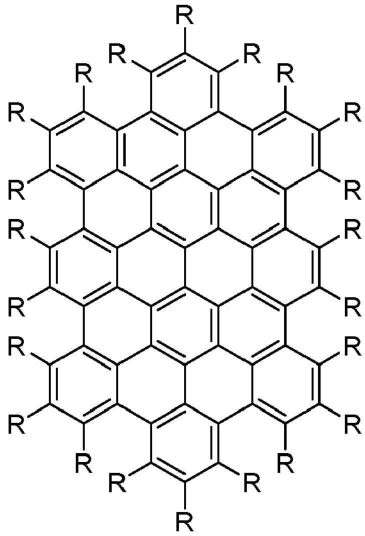

(VII)

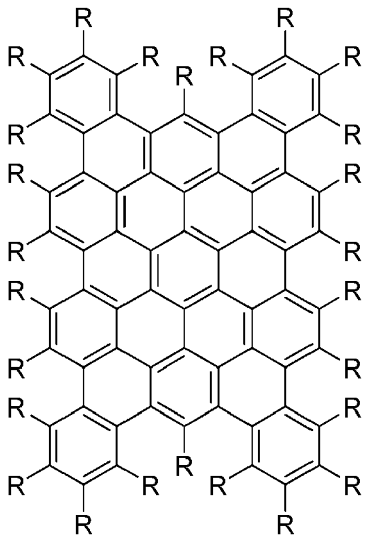

(VIII)

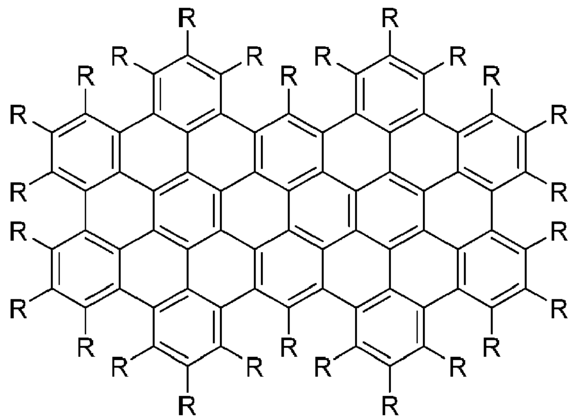

(IX)

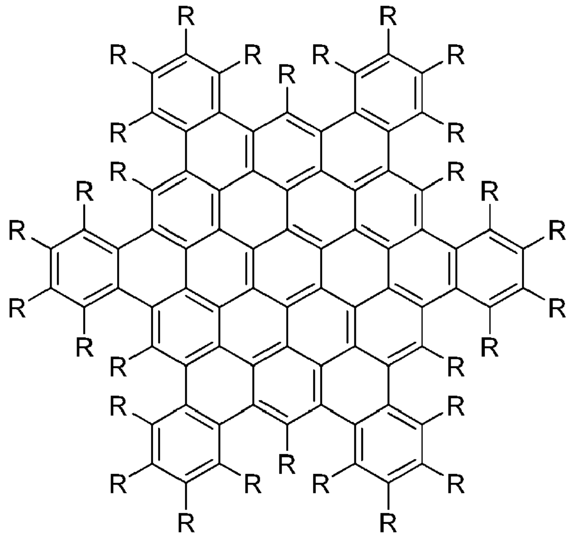

(X)

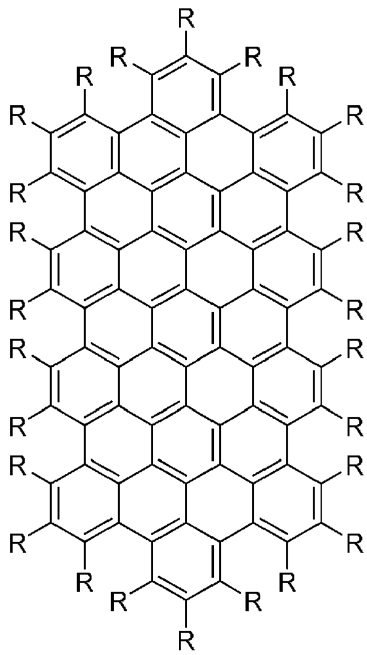

(XI)

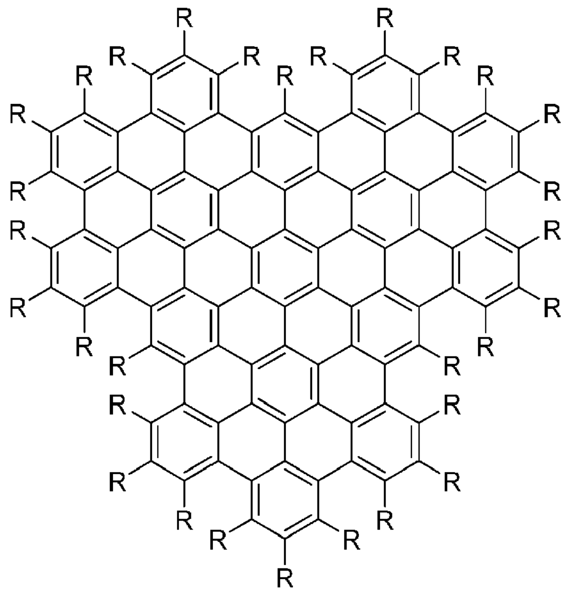

(XII)

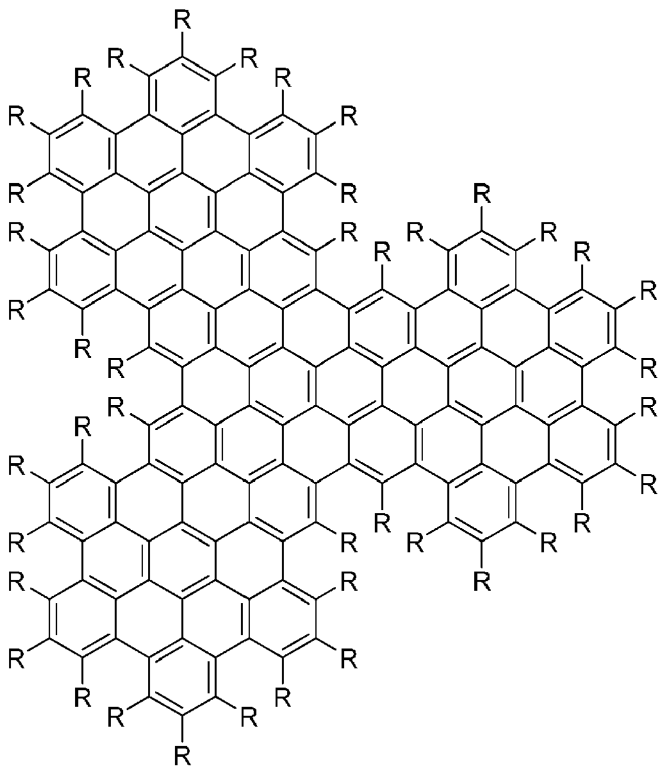

(XIII)

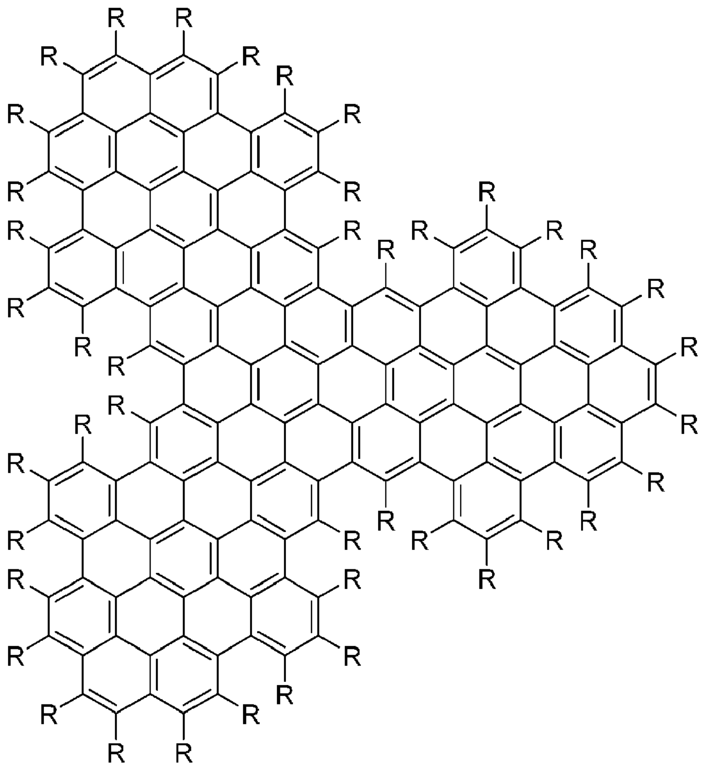

(XIV)

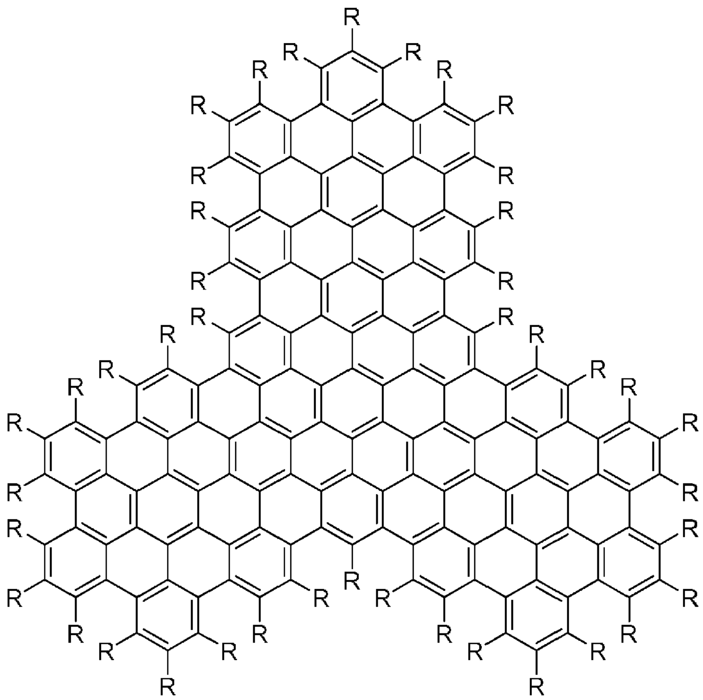

(XV)

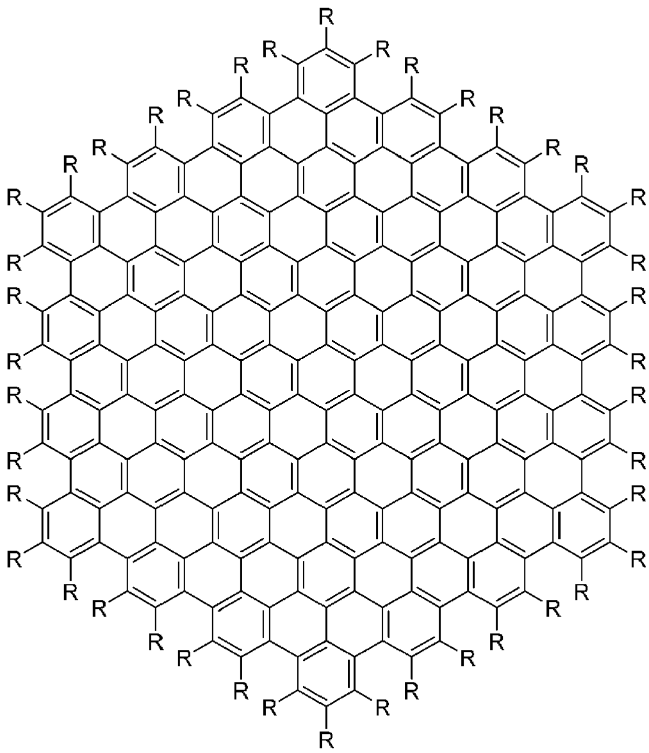

(XVI)

wherein in each of the Formulas (I) to (XVI)

the residues R are, independently from each other, hydrogen or a substituent $R^S$, wherein the subsituent $R^S$ is selected from a $C_{1-20}$ alkyl group; an aryl group; an amine group; a carboxylic acid group or a salt or an ester thereof; a silyl group; a germanyl group; and a boron-containing group,
wherein in Formula (II)
the ring atoms X are, independently from each other, C or N.

**10.** The process according to one of the preceding claims, wherein the diamond precursor material additionally comprises a heteroatom-containing dopant compound, wherein the heteroatom is selected from nitrogen, silicon, germanium and boron.

**11.** The process according to claim 10, wherein the heteroatom-containing dopant compound is selected from one or more of the following compounds:

- a silane,
- an amine $N(R^1)(R^2)(R^3)$, wherein $R^1$, $R^2$ and $R^3$ are, independently from each other, selected from aryl and $C_{1-20}$ alkyl,
- a nitrogen-containing polycyclic aromatic compound comprising 2 to 4 fused aromatic rings, wherein at least one of the fused aromatic rings comprises nitrogen as a ring atom and/or is substituted with a cyano group.

**12.** The process according to one of the preceding claims, wherein the the process is carried out in a multi-anvil press.

**13.** Use of the polycyclic aromatic compound according to one of the claims 1 to 9 as a precusor in diamond particle synthesis.

Europäisches Patentamt
European Patent Office
Office européen des brevets

# EUROPEAN SEARCH REPORT

Application Number
EP 23 20 8593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br>A | SHUANGSHUANG ZHANG ET AL: "Narrow-gap Semiconducting Superhard Amorphous Carbon with Superior Toughness", ARXIV.ORG, CORNELL UNIVERSITY LIBRARY, 201 OLIN LIBRARY CORNELL UNIVERSITY ITHACA, NY 14853, 15 June 2021 (2021-06-15), XP081989978,<br>* page 9, paragraph 2; figure 2 *<br>* Sample preparation; page 12 *<br>* the whole document *<br>----- | 1,2,5, 12,13<br><br><br><br><br><br><br>3,4,6-11 | INV.<br>C01B32/26<br>B01J3/06 |
| X<br><br><br><br><br><br><br><br><br><br><br>Y | DAVYDOV V A ET AL: "Nanosized carbon forms in the processes of pressure-temperature-induced transformations of hydrocarbons", CARBON, ELSEVIER OXFORD, GB, vol. 44, no. 10, 1 August 2006 (2006-08-01), pages 2015-2020, XP025011166, ISSN: 0008-6223, DOI: 10.1016/J.CARBON.2006.01.012 [retrieved on 2006-08-01]<br>* page 2016, right-hand column, paragraph 2 *<br>* page 2016, left-hand column, paragraph 3; figures 1-2 *<br>* the whole document *<br>-----<br>-/-- | 13<br><br><br><br><br><br><br><br><br><br><br>1-12 | TECHNICAL FIELDS SEARCHED (IPC)<br>C01B<br>B01J |

The present search report has been drawn up for all claims

1

| Place of search | Date of completion of the search | Examiner |
|---|---|---|
| The Hague | 19 April 2024 | Follens, Lana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 20 8593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YAN WANG: "Hydrogenation of Hexa- peri -hexabenzocoronene: An Entry to Nanographanes and Nanodiamonds", ACS NANO, vol. 17, no. 19, 20 September 2023 (2023-09-20), pages 18832-18842, XP093153561, US ISSN: 1936-0851, DOI: 10.1021/acsnano.3c03538 Retrieved from the Internet: URL:https://pubs.acs.org/doi/pdf/10.1021/acsnano.3c03538> | 1-12 | |
| A | * page 18833, left-hand column, paragraph 2 * * conclusion; page 18838, right-hand column * * the whole document * ----- | 13 | |
| | | | TECHNICAL FIELDS SEARCHED (IPC) |

The present search report has been drawn up for all claims

1

| Place of search | Date of completion of the search | Examiner |
|---|---|---|
| The Hague | 19 April 2024 | Follens, Lana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018122321 A1


### Non-patent literature cited in the description


- **XI-GUI YANG**. Nanodiamonds: Synthesis, properties and applications in nanomedicine. *Materials & Design*, 2021, vol. 210, 110091
- **T. WEIL** ; **Y. WU**. Recent Developments of Nanodiamond Quantum Sensors for Biological Applications. *Adv. Sci.*, 2022, vol. 9, 2200059
- **E.K.-H. CHOW et al.** Nanodiamonds: The intersection of nanotechnology, drug development, and personalized medicine. *Sci. Adv.*, 2015, vol. 1, e1500439
- **E.K.-H. CHOW et al.** Biomedical applications of nanodiamonds: From drug-delivery to diagnostics. *SLAS Technology*, 2023, vol. 28, 214-222
- **A. MIOTELLO et al.** Nanodiamonds: Synthesis and Application in Sensing, Catalysis, and the Possible Connection with Some Processes Occurring in Space. *Appl. Sci.*, 2020, vol. 10, 4094
- **V.A. DAVYDOV et al.** Conversion of polycyclic aromatic hydrocarbons to graphite and diamond at high pressures. *Carbon*, 2005, vol. 42, 261-269
- **XI-GUI YANG et al.** Two-step high-pressure high-temperature synthesis of nanodiamonds from naphthalene. *Chin. Phys. B*, 2020, vol. 29 (10), 108102
- **S. STEHLIK et al.** Size and Purity Control of HPHT Nanodiamonds down to 1 nm. *J. Phys. Chem. C*, 2015, vol. 119, 27708-27720
- **R.S. RUOFF et al.** Sub-4 nm Nanodiamonds from Graphene Oxide and Nitrated Polycyclic Aromatic Hydrocarbons at 423 K. *ACS Nano*, 2021, vol. 15 (11), 17392-17400
- **K. MÜLLEN et al.** From Nanographene and Graphene Nanoribbons to Graphene Sheets: Chemical Synthesis. *Angew. Chem. Int. Ed.*, 2012, vol. 51, 7640-7654
- **K. MÜLLEN et al.** Graphene as Potential Material for Electronics. *Chem. Rev.*, 2007, vol. 107, 718-747
- **K. MÜLLEN et al.** New advances in nanographene chemistry. *Chem. Soc. Rev.*, 2015, vol. 44, 6616-6643
- **K. MÜLLEN et al.** Large polycyclic aromatic hydrocarbons: Synthesis and discotic organization. *Pure Appl. Chem.*, 2009, vol. 81 (12), 2203-2224
- **A. TRAN-VAN** ; **H.A. WEGNER**. Strategies in Organic Synthesis for Condensed Arenes, Coronene, and Graphene. *Top. Curr. Chem*, 2014, vol. 349, 121-158
- **R.C. LIEBERMANN**. Multi-anvil, high pressure apparatus: a half-century of development and progress. *High Pressure Research*, 2011, vol. 31 (4), 493-532
- **K. MÜLLEN et al.** *Angew. Chem. Int. Ed. Engl.*, 1997, vol. 36 (15), 1604-1607
- **K. MÜLLEN et al.** *J. Am. Chem. Soc.*, 2021, vol. 143, 10403-10412